# EUROPEAN PATENT APPLICATION

(11) **EP 2 947 274 A1**
(43) Date of publication of application: **25.11.2015**
(21) Application number: 15168472.7
(22) Date of filing: 20.05.2015
(51) Int. Cl.: F01D 5/18

(54) **TURBULATING COOLING STRUCTURES**

(30) Priority: 22.05.2014 US 201462001897 P
(71) Applicant: United Technologies Corporation, Hartford, CT 06101 (US)
(72) Inventor: MONGILLO, Dominic J., West Hartford, CT Connecticut 06107 (US); PROPHETER-HINCKLEY, Tracy A., Manchester, CT Connecticut 06042 (US); XU, JinQuan, East Greenwich, RI Rhode Island 02818 (US)
(74) Representative: Leckey, David Herbert

(57) **Abstract**

In a first embodiment, a hollow gas turbine engine workpiece (12;12a;12b) comprises first and second walls (102a,104a) formed via additive manufacturing, and a cooling passage (108a,108b) defined between the first and second walls (102a,104a) by a surface of the first and second walls (102a,104a) having arithmetic average surface roughness (ε) of at least 100 µin (0.0025mm).

In a second embodiment, a method of manufacture of a gas turbine engine component (12;12a;12b) comprises depositing successive layers (L) of pulverant material (20) via additive manufacturing to form first and second walls (102a,104a) defining a cooling passage (108a;108b) therebetween, and loading a grain size (G) of the pulverant material (20) to produce lattice convective cooling design networks of various size and proportions with each having a range of relative roughness values, 0.10<ε/Dh<0.50 to achieve optimal thermal cooling performance along the cooling passage (108a;108b).

## Description

### BACKGROUND

The present invention relates generally to gas turbine engine work pieces, and more particularly to additively manufactured gas turbine engine work pieces with cooling airflow turbulating vascular cooling passages.

Gas turbine engines are internal combustion engines with upstream compressors and downstream turbines fluidly connected through a combustor. Gas turbines operate according to the Brayton cycle, extracting energy from high-pressure, high-temperature airflow downstream of the combustor, where fuel is injected into pressurized airflow from the compressor, and ignited. Many gas turbine engine components guide airflow, either as a working fluid of the engine, or for cooling. Blades and vanes, for instance, are airfoil components with smooth outer surfaces configured to guide working fluid for compression (in a compressor) or energy extraction (in a turbine).

Additive manufacturing is increasingly used to fabricate gas turbine engine workpieces such as blades, vanes, air seals, and cooled panels in the e.g. a combustor or high pressure compressor. Some such parts are fabricated with vascular cooling passages to encourage heat exchange with cooling airflow, so as to reduce operating temperature and correspondingly increase part lifetimes.

### SUMMARY

In one embodiment, the present invention relates to a hollow gas turbine engine workpiece comprises first and second walls formed via additive manufacturing, and a vascular cooling passage defined between the first and second walls by a surface of the first and second walls having a range of relative roughness of 0.10<ε/Dh<0.50.

In another embodiment, the present invention relates to a method of manufacture of a gas turbine engine component comprises depositing successive layers of pulverant material via additive manufacturing to form first and second walls defining a vascular cooling passage therebetween, and loading a grain size of the pulverant material to produce a range of relative roughness, 0.10<ε/Dh<0.50.

### BRIEF DESCRIPTION OF THE DRAWINGS

FIG. 1 is a schematic block diagram of an embodiment of an additive manufacturing system.
FIG. 2 is a cut-away perspective view of a first embodiment of a gas turbine engine workpiece section illustrating a vascular cooling structure.
FIG. 3 is a cut-away perspective view of a second embodiment of a gas turbine engine workpiece section illustrating a vascular cooling structure.
FIG. 4a is a simplified cross-sectional view of one embodiment of the gas turbine engine workpiece section of FIG. 2, illustrating cooling airflow through a smooth vascular cooling structure.
FIG. 4b is a simplified cross-sectional view of another embodiment of the gas turbine engine workpiece section of FIG. 2, illustrating cooling airflow through a rough vascular cooling structure.

While the above-identified figures set forth embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

Additive manufacturing can be used to fabricate gas turbine workpieces with internal vascular cooling structures. Pulverant grain size partially determines the scale of roughness of resulting surfaces, including internal surfaces of vascular cooling passages. By optimizing this roughness scale, the present invention allows for increased heat transfer through turbulent cooling airflow, while limiting pressure losses through cooling channels.

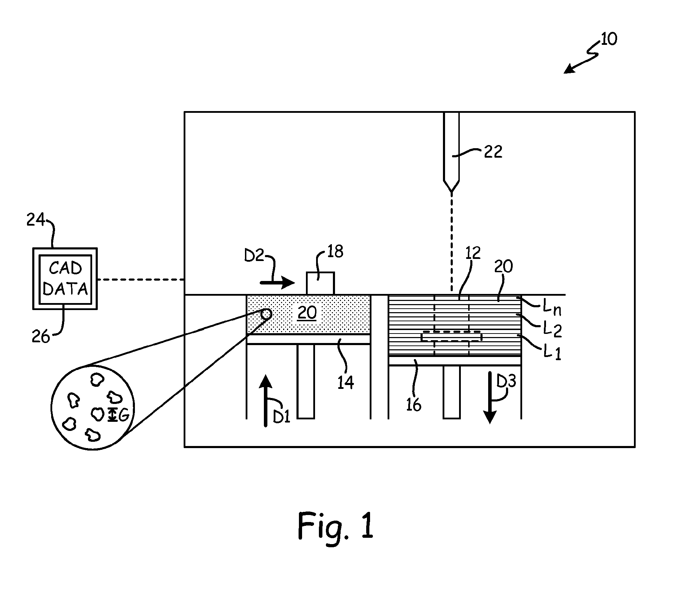

FIG. 1 is a schematic diagram of additive manufacturing system 10, a system for fabricating workpiece 12. Workpiece 12 can be, for example, a blade, vane, air seal, or cooled combustor or high pressure compressor panel of a gas turbine engine. In the illustrated embodiment, additive manufacturing system 10 comprises delivery platform 14, build platform 16, spreader 18, pulverant material 20, melting or sintering device 22, and controller 24 with CAD data 26.

Delivery platform 14 carries pulverant material 20 with grain size G. Pulverant material 20 can, for example, comprise a refractory metal powder, a silica powder, an alumina powder, powders of nickel, cobalt, or alloys thereof, or a combination including at least two of such powders. Build platform 16 is a substrate on which workpiece 12 is additively built. Melting device 22 could include a laser or an electron beam melting device, although other melting and/or sintering devices are also contemplated.

In one non-limiting use of the additive manufacturing system 10, delivery platform 14 is movable in a first direction D1 to position pulverant material 20 relative to build platform 16. Spreader 18 can move in a second direction D2 (i.e., perpendicular to the first direction D1) to spread a thin layer of pulverant material 20 on build platform 16. Melting device 22 may then be actuated to melt a layer of pulverant material 20 at locations where the geometry of workpiece 12 is to exist to prepare a first layer L1 of the workpiece 12. Some portion of pulverant material 20 may remain within workpiece 12 after the melting step. This pulverant material 20 can be removed or remain inside workpiece 12 to provide support.

Once the first layer L1 is completed, build platform 16 can be moved in a direction D3 (opposite of the direction D1). In one embodiment, build platform 16 is moved in direction D3 by a distance equal to about one layer. Next, another layer of pulverant material 20 may be deposited on the build platform 16 via the spreader 18. For example, the layer of pulverant material 20 may be spread over the previously formed first layer L1. Melting device 22 melts the second layer of pulverant material 20 to prepare a second layer L2 of workpiece 12. The second layer L2 is adhered to the first layer L1 during the melting process. This layer by layer process may be repeated over a total of Ln layers until the entire workpiece 12 with desired workpiece geometry has been additively built.

In the illustrated embodiment, delivery platform 14, build platform 16, spreader 18, and/or melting or sintering device 22 are controlled by controller 24 with reference to CAD data 26. CAD data 26 defines a cross-section of a desired geometry of the workpiece 12. Controller 24 controls actuation of components of additive manufacturing system 10 so as to join layers L1 to Ln of the workpiece 12 in a pattern defined by reference to CAD data 26. Controller 24 can, for example, be programmed with a part design describing workpiece 12 in three dimensions. Alternatively, controller 24 can specify the steps to fabricating workpiece 12 and machining workpiece 12 without including a full design of the finished gas turbine component. Although controller 24 is depicted as a single unitary component, some embodiments of additive manufacturing system 10 can use more than one controller 24. In particular, some embodiments of additive manufacturing system 10 can include a plurality of (e.g. parallel) additive manufacturing tools, each with an associated controller 24.

Although additive manufacturing system 10 is depicted and described herein as a powder bed manufacturing system, other additive manufacturing systems may equivalently be used without departure from the scope or spirit of the present invention. In various embodiments, additive manufacturing system 10 may be a laser additive manufacturing (LAM) system (e.g. laser engineered net shaping (LENS), laser powder deposition (LPD), or selective laser sintering (SLS) apparatus) or electron beam machining system (e.g. electron beam melting (EBM) or electron beam wire (EBW) apparatus). In some embodiments, additive manufacturing system 10 can incorporate a plurality of different additive manufacturing tools that operate sequentially or in parallel. All embodiments of additive manufacturing system 10 build workpiece 12 layer-by-layer. It should be appreciated that the additive manufacturing system 10 could include additional features not described with reference to the highly schematic depiction of Figure 1.

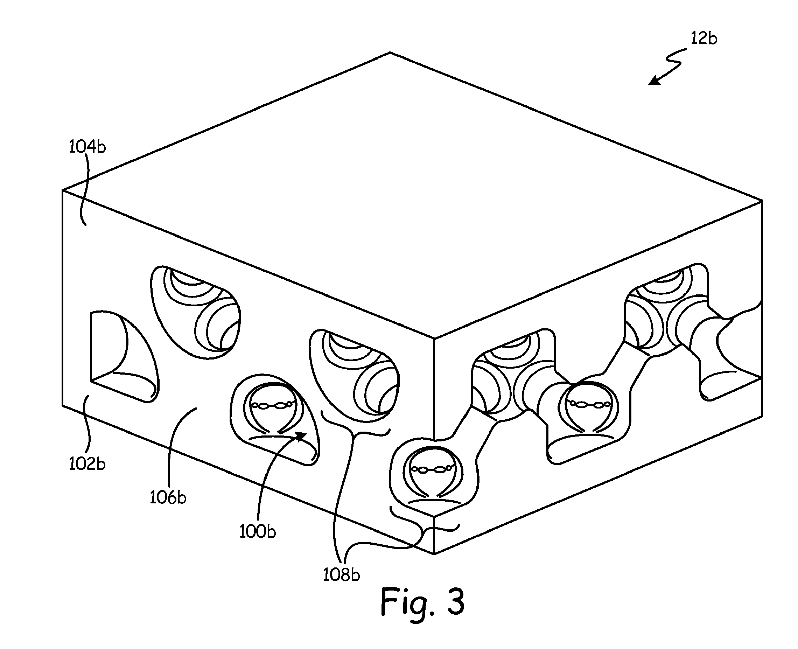

Pulverant material 20 has a grain size G that at least partially determines the roughness of workpiece 12. Coarser pulverant grain produces rough surfaces in workpiece 12, while fine pulverant produces smoother surfaces. Pulverant grain scale is selected for optimal vascular cooling characteristics, as described below with respect to FIGs. 3a and 3b. In some embodiments, additive manufacturing system 10 can include additional components for subtractively smoothing or shaping workpiece 12.

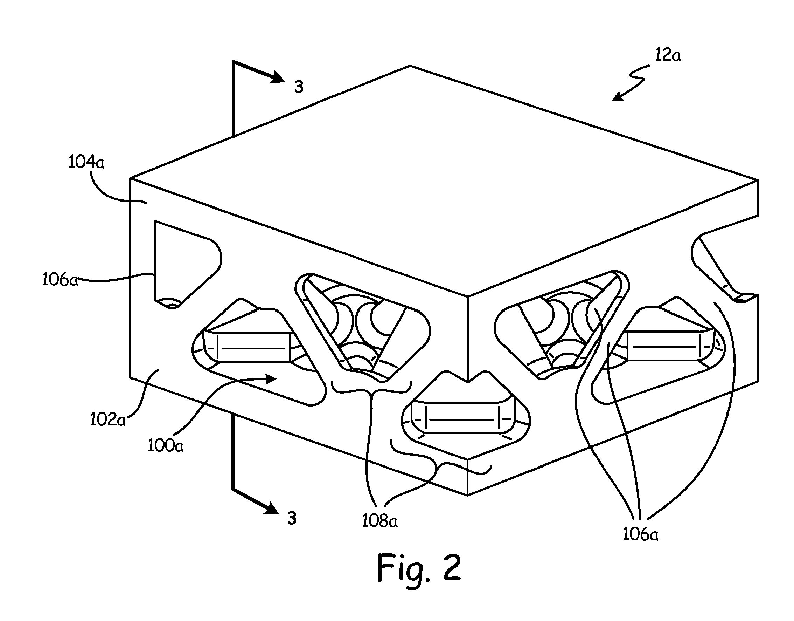

FIG. 2 is a simplified perspective view of a section of a piece of one embodiment 12a of workpiece 12, illustrating cavity 100a formed between first wall 102a and second wall 104a. Workpiece 12a can, for example, be an airfoil blade or vane, an air seal component, or a cooled panel for a gas turbine engine. First and second walls 102a and 104a can, for example, be exterior walls of workpiece 12a. In the illustrated embodiment, first wall 102a and second wall 104a are connected by struts 106a, which form a lattice structure with openings that define vascular cooling passages 108a through workpiece 12a. In the illustrated embodiment, workpiece 12a is a hollow structure wherein cooling passages 108a comprise the entirety of cavity 100a not occluded by struts 106a. Workpiece 12a is formed via additive manufacturing by deposition of successive layers of pulverant material. In some embodiments, the entirety of workpiece 12a can be fabricated via a single additive manufacturing process. In other embodiments, workpiece 12a can be the product of multiple additive manufacturing processes, and in some instances also subtractive manufacturing (i.e. machining) processes. Vascular cooling passage 108a carries cooling airflow through workpiece 12a, thereby reducing the operating temperature of workpiece 12 within a gas turbine engine, and increasing part lifetimes.

FIG. 3 is a simplified perspective view of a section of a piece of another embodiment 12b of workpiece 12a. Workpiece 12b substantially parallels workpiece 12a (described above with respect to FIG. 2), but dispenses with struts 106a in favor of a substantially solid workpiece body 106b having channel- or tunnel-like vascular cooling passages 108b. Workpiece 12b has first and second walls 102b and 104b that demarcate the outer bounds of solid body 106b, and into which vascular cooling passages 108b do not intrude. Vascular cooling passages 108b together form one or more cavities 100b, which may be directly fluidly coupled or fluidly isolated from one another, and which carry cooling airflow through workpiece 12b.

Workpieces 12a and 12b differ in the size and geometry of passages 108a and 108b. Optimal surface roughness for cooling may, as a result, vary between workpieces 12a and 12b.

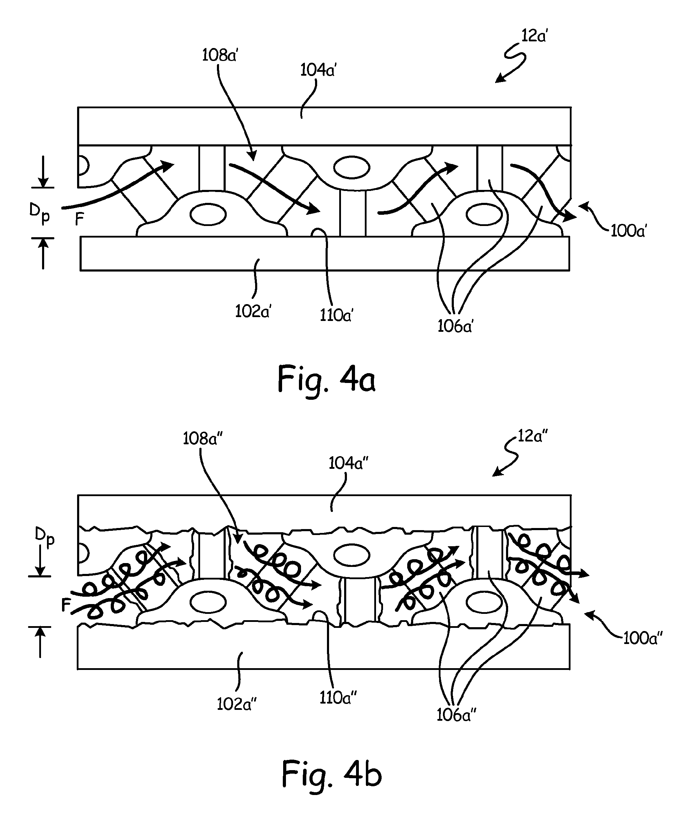

FIGs. 4a and 4b are simplified cross-sectional views of embodiments 12a' and 12a" of workpiece 12a, respectively. Workpieces 12a' and 12a" have cavities 100a' and 100a", first walls 102a' and 102a", second walls 104a' and 102a", struts 106a' and 106a", and vascular cooling passages 108a' and 108a", respectively, as described above with respect to FIGs. 2. Vascular cooling passages 108a (108a' and 108a") have passage dimension Dₚ, which can for example be a minimum, average, or median diameter or width of vascular cooling passages 108a. In some embodiments, vascular cooling passage 108a can be narrow passages with passage dimension Dₚ less than 0.15 inches (3.8mm), less than 0.12 inches (3mm), or less than 0.05 inches (1.3mm). First and second walls 102a' and 104a' and struts 106a' of workpiece 12a have substantially smooth internal surfaces 110a' with minimal arithmetic average surface roughness ε (commonly measured in µm or µin). By contrast, first and second walls 102a" and 104a" and struts 106a" of workpiece 12a" have rough internal surface 110a" substantial arithmetic average surface roughness ε, such that dimensionless relative roughness ε/Dh falls between 0.10 and 0.5. Dh is the hydraulic diameter of vascular cooling passage 108, with Dh=4A/P (for a substantially circular cross-section duct), where A is the cross-sectional flow area of vascular cooling passage 108, and P is the wetted perimeter of vascular cooling passage 108. P represents the surface length of cooling passage 108 in contact with flowing fluid at a given cross-section, and can depend upon both passage dimension Dₚ and passage geometry. In some embodiments, ε/Dh may fall between 0.10 and 0.30. Arithmetic surface roughness ε may, for example, be at least 100 µin (0.0025mm), and less than 1000 µin (0.0254mm). In some embodiments, arithmetic surface roughness ε may be less than 600 µin (0.0152mm).

As illustrated in FIG. 4b, the increased arithmetic average surface roughness of internal surface 110a relative to internal surface 110a promotes turbulent airflow, resulting in increased heat convective heat exchange (i.e. higher Nusselt number Nu), and enhanced cooling. Increased turbulence increases pressure loss across vascular cooling passage 108a relative to vascular cooling passage 108a, however, resulting in a corresponding decrease in internal convection. Optimal embodiments of internal surface 110 produce fully turbulent airflow F via flow field vorticity generated through geometry configuration with low-to-moderate relative surface roughness ε/Dh (defined as the ratio of arithmetic surface roughness ε to hydraulic diameter Dh), thereby minimizing pressure losses while maximizing Nusselt number Nu. Fully turbulent flow is achieved via internal surface 110 with friction factor *f* = 4**f*ₛₘₒₒₜₕ (where *f*ₛₘₒₒₜₕ is the friction factor of a perfectly smooth channel). For ranges of passage dimension Dₚ discussed above, the relative surface roughness ε/Dh must be controlled to ensure optimal heat transfer and pressure loss performance. Differences in relative surface roughness ε/Dh can be achieved by altering machine build parameters, build orientation, and post processing methods. The vascular network lattice structure, array density distribution, streamwise and lateral spacing, and relative feature and channel size are critical dimensional parameters for establishing and defining the relative surface roughness requirements to achieve critical pressure loss and convective cooling requirements. The present invention can, for example, have internal surfaces 110 with relative surface roughness 0.10<ε/Dh<0.50. In some embodiments, internal surfaces 110 may have relative surface roughness ε/Dh not less than 0.14. In further embodiments, internal surfaces 110 may have relative surface roughness ε/Dh not greater than 0.30. These critical ranges of relative surface roughness ε/Dh achieve optimized cooling. In one embodiment, desired arithmetic average surface roughness is obtained by fabricating workpiece 12 using pulverant grain of a corresponding coarseness, or post processing.

By providing workpiece 12 with internal surface 110 of sufficient roughness Ra to fully turbulate airflow F, the present invention maximizes Nusselt number Nu for heat exchange at internal surface 110. By limiting arithmetic average surface roughness ε such that friction factor *f* ≤ 4**f*ₛₘₒₒₜₕ, the present invention avoids wasteful pressure losses from unnecessary roughness. In this way, workpiece 12 provides for optimal convective heat transfer with cooling airflow F, thereby reducing the operating temperature of workpiece 12 in a gas turbine engine, and increasing the expected lifetime of workpiece 12.

### Discussion of Possible Embodiments

The following are non-exclusive descriptions of possible embodiments of the present invention.

A hollow gas turbine engine workpiece comprises: a first wall; a second wall; and a cooling passage defined between the first wall and the second wall by surfaces of the first and second walls having a relative roughness ε/Dh between 0.10 and 0.50.

The hollow gas turbine engine workpiece of the preceding paragraph can optionally include, additionally and/or alternatively, any one or more of the following features, configurations and/or additional components:
A further embodiment of the foregoing hollow gas turbine engine workpiece, wherein the relative roughness ε/Dh is at most 0.30.

A further embodiment of the foregoing hollow gas turbine engine workpiece, wherein the relative roughness ε/Dh is at least 0.14.

A further embodiment of the foregoing hollow gas turbine engine workpiece, wherein the hollow gas turbine engine workpiece is a gas turbine vane, blade, air seal, or panel, and the cooling passage is a vascular cooling passage.

A further embodiment of the foregoing hollow gas turbine engine workpiece, wherein the arithmetic average surface roughness is between 100 µin (0.00254mm) and 1000 µin (0.0254mm).

A further embodiment of the foregoing hollow gas turbine engine workpiece, wherein the arithmetic average surface roughness is less than 600 µin (0.0152mm).

A further embodiment of the foregoing hollow gas turbine engine workpiece, wherein the cooling passage has a minimum passage dimension less than 0.15 inches (3.8mm).

A further embodiment of the foregoing hollow gas turbine engine workpiece, wherein the cooling passage has a minimum passage dimension less than 0.12 inches (3mm).

A further embodiment of the foregoing hollow gas turbine engine workpiece, wherein the cooling passage has a minimum passage dimension less than 0.05 inches (1.3mm).

A further embodiment of the foregoing hollow gas turbine engine workpiece, wherein a dimensionless friction factor of the surfaces of the first and second walls is no more than four times a friction factor of a smooth surface.

A further embodiment of the foregoing hollow gas turbine engine workpiece, further comprising a lattice structure extending through the cooling passage to connect the first wall and the second wall.

A further embodiment of the foregoing hollow gas turbine engine workpiece, wherein the first wall and the second wall are formed via additive manufacturing.

A method of manufacture of a gas turbine engine workpiece, the method comprising: depositing successive layers of pulverant material via additive manufacturing to form first and second walls defining a cooling passage therebetween; and loading pulverant material or applying a post-processing technique, so as to produce a surface of the first and second walls having a relative roughness ε/Dh between 0.10 and 0.50 along the cooling passage.

The method of the preceding paragraph can optionally include, additionally and/or alternatively, any one or more of the following features, configurations and/or additional components:
A further embodiment of the foregoing method, wherein the relative roughness ε/Dh is at most 0.30.

A further embodiment of the foregoing method, wherein the relative roughness ε/Dh is at least 0.14.

A further embodiment of the foregoing method, wherein a grain size of the pulverant material, or a post processing technique, is selected to produce a roughness between 100 µin (0.0025mm) and 1000 µin (0.00254mm) along the cooling passage.

A further embodiment of the foregoing method, wherein the grain size is selected to produce a roughness no greater than 600 µin (0.0152mm) along the cooling passage.

A further embodiment of the foregoing method, wherein the successive layers of pulverant material further form struts extending between the first and second walls.

A further embodiment of the foregoing method, wherein the first and second walls are separated by a minimum distance less than 0.15 inches (3.8mm).

A further embodiment of the foregoing method, wherein the first and second walls are separated by a minimum distance less than 0.05 inches (1.3mm).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hollow gas turbine engine workpiece (12;12a;12b) comprising:
a first wall (102a);
a second wall (104a); and
a cooling passage (108a,108b) defined between the first wall (102a) and the second wall (104a) by surfaces of the first and second walls (102a, 104a) having a relative roughness ε/Dh between 0.10 and 0.50.

2. The hollow gas turbine engine workpiece (12;12a,12b) of claim 1, wherein the relative roughness ε/Dh is at most 0.30.

3. The hollow gas turbine engine workpiece (12;12a,12b) of claim 1 or 2, wherein the hollow gas turbine engine workpiece (12;12a;12b) is a gas turbine vane, blade, air seal, or panel, and the cooling passage (108a,108b) is a vascular cooling passage (108).

4. The hollow gas turbine engine workpiece (12;12a,12b) of claim 1, 2 or 3, wherein the arithmetic average surface roughness (ε) is between 100 µin (0.0025mm) and 1000 µin (0.0254mm), wherein, optionally, the arithmetic average surface roughness (ε) is less than 600 µin (0.0152mm).

5. The hollow gas turbine engine workpiece (12;12a,12b) of any preceding claim, wherein the cooling passage has a minimum passage dimension (Dₚ) less than 0.15 inches (3.8mm), for example less than 0.12 inches (3mm).

6. The hollow gas turbine engine workpiece (12;12a;12b) of claim 5, wherein the cooling passage has a minimum passage dimension (Dₚ) less than 0.05 inches (1.3mm).

7. The hollow gas turbine engine workpiece (12;12a;12b) of any preceding claim, wherein a dimensionless friction factor (f) of the surfaces of the first and second walls (102a, 104a) is no more than four times a friction factor of a smooth surface (fₛₘₒₒₜₕ).

8. The hollow gas turbine engine workpiece (12;12a;12b) of any preceding claim, further comprising a lattice structure extending through the cooling passage (108a,108b) to connect the first wall (102a) and the second wall (104a).

9. The hollow gas turbine engine workpiece (12;12a;12b) of any preceding claim, wherein the first wall (102a) and the second wall (104a) are formed via additive manufacturing.

10. A method of manufacture of a gas turbine engine workpiece (12;12a;12b), the method comprising:
depositing successive layers (L) of pulverant material (20) via additive manufacturing to form first and second walls (102,104a) defining a cooling passage (108a,108b) therebetween;
loading pulverant material (20) or applying a post-processing technique, so as to produce a surface of the first and second walls (102a,104a) having a relative roughness ε/Dh between 0.10 and 0.50 along the cooling passage (108a,108b).

11. The method of claim 10, wherein the relative roughness ε/Dh is at most 0.30.

12. The method or hollow gas turbine engine workpiece of any preceding claim, wherein the relative roughness ε/Dh is at least 0.14.

13. The method of claim 10, 11 or 12, wherein a grain size (G) of the pulverant material (20), or a post processing technique, is selected to produce a roughness between 100 µin (0.0025mm) and 1000 µin (0.00254mm) along the cooling passage (108a;108b), optionally to produce a roughness no greater than 600 µin (0.0152mm) along the cooling passage.

14. The method of any of claims 10 to 13, wherein the successive layers (L) of pulverant material (20) further form struts (106a) extending between the first and second walls (102a,104a).

15. The method of any of claims 10 to 14, wherein the first and second walls (102a,104a) are separated by a minimum distance less than 0.05 inches (1.3mm).
